# FASCICULE DE BREVET EUROPEEN

(11) **EP 2 150 661 B1**
(45) Date de publication et mention de la délivrance du brevet: **18.08.2010**
(21) Numéro de dépôt: 08805897.9
(22) Date de dépôt: 30.05.2008
(51) Int. Cl.: E04H 4/14, E04H 4/06, F16B 2/04

(54) **DISPOSITIF DE VERROUILLAGE ET DE DEVERROUILLAGE RAPIDE POUR PLATINE DE FIXATION D'ELEMENT DE TOITURE D'ABRI DE PISCINE**
SCHNELL VERSCHLIESSBARE UND SCHNELL ZU ÖFFNENDE VORRICHTUNG FÜR EINE PLATTE ZUR ANBRINGUNG AN EINEM ÜBERWACHUNGSELEMENT EINES SWIMMING-POOLS
RAPID LOCKING AND UNLOCKING DEVICE FOR AN ATTACHMENT PLATE FOR A SWIMMING POOL SHELTER ROOF ELEMENT

(30) Priorité: 30.05.2007 FR 0755350
(43) Date de publication de la demande: 10.02.2010
(73) Titulaire: Abrisud, 32600 L'Isle Jourdain (FR)
(72) Inventeur: TESTU, William, F-32600 Aurade (FR); LENOIR, Philippe, F-31700 Cornebarrieu (FR)
(74) Mandataire: Richebourg, Michel François
(86) Numéro de dépôt international: PCT/FR2008/050954
(87) Numéro de publication internationale: WO 2008/149042

(56) Documents cités:
- EP-A- 1 367 266
- FR-A- 2 829 196
- US-A- 4 953 269
- US-A- 5 184 377

## Description

### DOMAINE D'APPLICATION DE L'INVENTION

La présente invention a trait au domaine des abris de piscine et notamment aux adaptations permettant de réaliser la fixation au sol des éléments de toiture constituant lesdits abris dans les meilleures conditions.

### DESCRIPTION DE L'ART ANTÉRIEUR

Les abris de piscine sont classiquement liés au sol ou au rebord du bassin au moyen de platines de liaison qui, percées d'un orifice, sont assujetties au sol ou au rebord du bassin au moyen d'une tige filetée équipée d'une tête associée à une poignée. Ladite tige traverse la platine et vient se visser dans un insert fileté inséré dans le sol à cet effet, jusqu'à ce que la tête vienne en appui sur la platine et la maintienne en position. Classiquement, les opérations d'enlèvement ou d'installation des abris exigent le dévissage ou le vissage d'au moins quatre tiges filetées par élément de toiture.

Dans certains modes de réalisation, en addition de leur fonction de fixation au sol des rebords de l'élément de toiture, les platines de liaison autorisent le basculement des éléments de toiture sur un de leur rebord pour permettre l'ouverture de l'abri par maintien de la position entrouverte. Ces platines de liaison sont donc sollicitées par des contraintes non négligeables requérant une liaison au sol sécurisée.

Les documents US-A-5184377 et US-A-4953269 décrivent respectivement un dispositif de verouillage/déverrouillage qui comprend les charactéristiques du préambule de la revendication 1.

### DESCRIPTION DE L'INVENTION

La durée des opérations de vissage et de dévissage a amené la demanderesse à réaliser des recherches visant à proposer un dispositif de fixation des platines de liaison au sol des abris de piscine proposant un verrouillage/déverrouillage plus rapide pour les platines de liaison.

Un autre objectif de ces recherches a été de concevoir un dispositif susceptible de s'adapter aux installations existantes et notamment aux inserts (ou chevilles) filetés déjà insérés dans le sol à des fins de réception des tiges filetées classiquement utilisées pour fixer les platines au sol ou au rebord du bassin.

Ces recherches ont abouti à la conception d'un dispositif de verrouillage et de déverrouillage résolvant les problèmes de l'art antérieur et susceptible de s'intégrer dans les installations existantes.

Selon l'invention, ce dispositif de verrouillage et de déverrouillage au sol d'une platine de liaison au sol ou au rebord d'un bassin d'un élément de toiture,
la platine étant d'une part liée au rebord de l'élément de toiture et d'autre part liée au sol ou au rebord du bassin,
la platine étant percée d'un orifice venant en vis à vis d'un trou ménagé dans le sol,
le dispositif venant coopérer avec le trou ménagé au sol et prendre appui sur la platine à des fins de fixation de cette dernière,
est remarquable en ce qu'il comprend une douille expansible passant d'un volume dit de repos autorisant son introduction dans le trou ménagé dans le sol à un volume dit expansé assurant son adhérence aux parois dudit trou.

Cette caractéristique est particulièrement avantageuse en ce qu'elle ne requiert plus une opération de vissage pour la fixation des platines au sol ou au rebord de la piscine. En outre, l'introduction de la douille est particulièrement rapide puisque que sa taille au repos est inférieure à la taille du trou ménagé dans le sol.

De même, à partir d'un choix judicieux de matériaux et de dimensions pour la douille, il est tout à fait possible que l'expansion de la douille par exemple en plastique assure l'adhérence de cette dernière aux parois même filetées du trou ménagé dans le sol. Ainsi, le dispositif de l'invention peut réaliser sa fonction dans les installations existantes répondant aux objectifs fixés. Pour ce faire, la douille expansible est un cylindre en matériau élastique dont une pression au niveau de ses extrémités permet la création d'une expansion radiale de son corps qui va permettre l'adhérence de la douille aux parois du trou.

Selon un autre choix technologique particulièrement adapté à la présence d'un insert fileté équipant le trou ménagé dans le sol, la douille expansible est constituée par un cylindre fileté selon le pas et la profondeur définis par l'insert et fendu pour passer d'une position de repos d'un diamètre permettant le glissement de la douille dans l'insert fileté à une position expansée où le diamètre correspond à une tige filetée coopérant avec le filetage de l'insert. Cette caractéristique optimise la tenue à la traction de la fixation. Néanmoins, comme proposée plus haut, une douille en matériau plastique peut également s'étendre radialement à l'intérieur d'un insert fileté et offrir de par la souplesse du matériau plastique coopérant avec le filetage une très bonne tenue. De même, selon un autre mode de réalisation, l'insert peut être en matière plastique et la douille expansible présenter une surface extérieure filetée ou cannelée.

Selon une autre caractéristique particulièrement avantageuse, la douille expansible est creuse et est enfilée sur une tige équipée d'une tête coopérant avec l'extrémité inférieure de la douille expansible et dont le déplacement en translation assure l'expansion ou la diminution de la douille.

Selon une autre caractéristique particulièrement avantageuse, ladite douille est associée à un moyen de verrouillage et d'appui sur la platine qui commande l'expansion de ladite douille. Selon une autre caractéristique particulièrement avantageuse, l'extrémité de la tige non équipé de la tête est associée à un levier de commande dont le mouvement assure le déplacement en translation de la tige. Plus précisément, le passage d'une configuration au repos à une configuration expansée est commandé par la rotation d'un levier/came de commande qui, dans le passage d'une position levée à une position abaissée, assure le mouvement d'une tige d'expansion dont la tête se déplace à l'intérieur de ladite douille, ledit levier assurant également un appui contre ladite platine.

Ainsi, la rotation du levier assure le déplacement en translation de la tige. Pour ce faire, ledit levier est préformé d'un profil qui dans sa rotation vient en appui contre ladite platine. De plus, selon une autre caractéristique, l'extrémité haute de la douille comprend une tête offrant une surface d'appui contre la platine et sur laquelle le profil du levier va venir en appui.

Selon une autre caractéristique particulièrement avantageuse, un moyen de compression s'intercale entre l'extrémité haute de la douille et la surface d'appui du levier et se déforme sous l'action de celui-ci en position abaissée.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

La figure 1 est un dessin schématique d'une vue en coupe d'une mode de réalisation du dispositif de l'invention en position relevée en utilisation,
La figure 2 illustre le position expansée du dispositif de la figure 1,
La figure 3 illustre un autre mode de réalisation du dispositif de l'invention en position de repos,
La figure 4 illustre le dispositif de la figure 3 en position expansée,
La figure 5 est un dessin schématique d'une vue en perspective éclatée du mode de réalisation des figures 3 et 4,
La figure 6 est un dessin schématique d'une vue en perspective éclatée d'un autre mode de réalisation.

### DESCRIPTION DES MODES DE RÉALISATION PRÉFÉRÉS

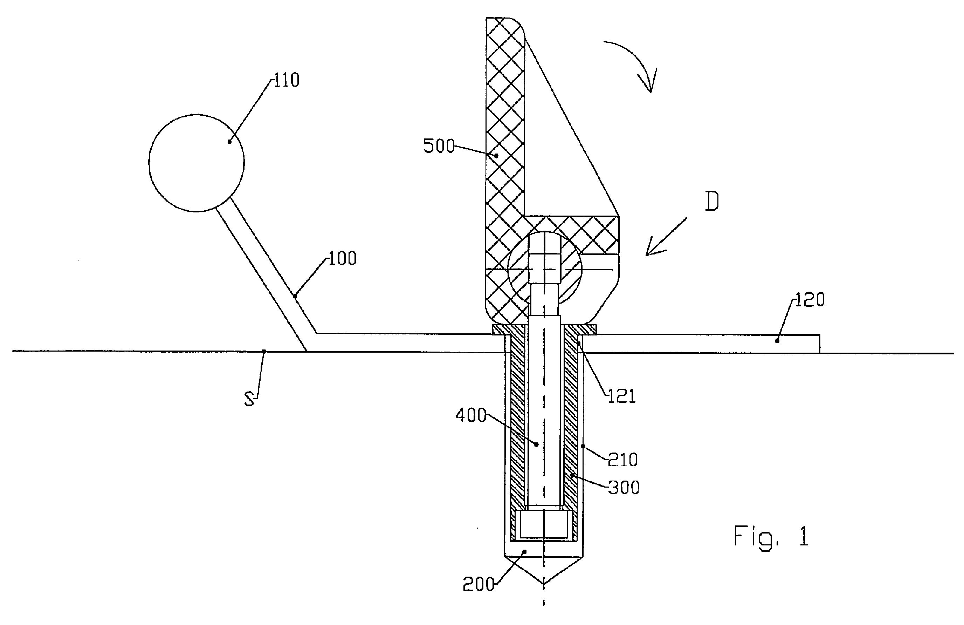

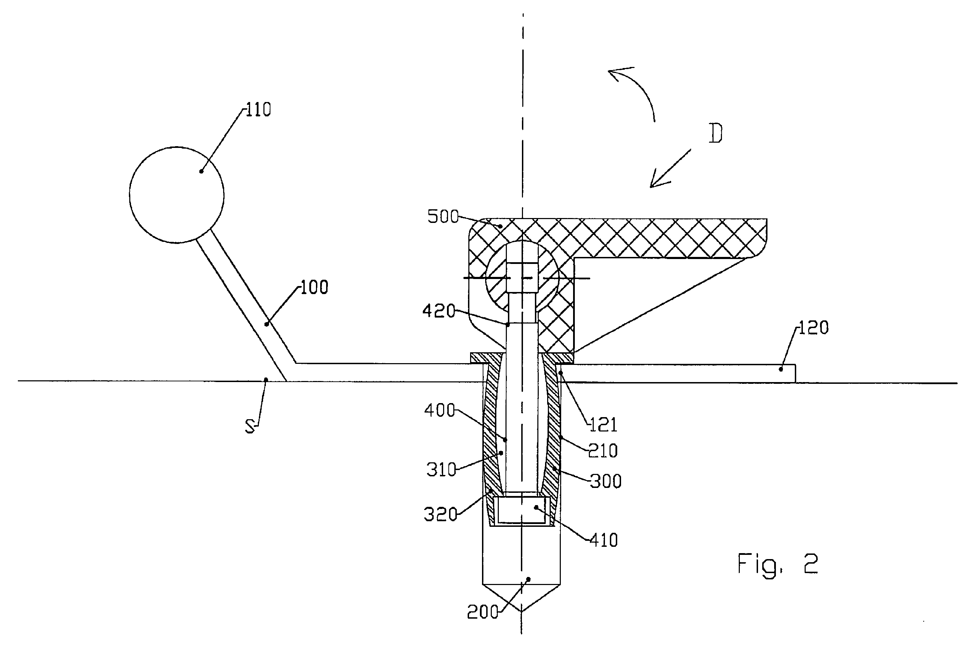

Tel qu'illustré sur le dessin des figures 1 et 2, le dispositif de verrouillage/déverrouillage référencé D dans son ensemble assure le positionnement et le maintien en position d'une platine de liaison 100 au sol S ou au rebord d'un bassin d'un élément de toiture non illustré. La platine 100 est d'une part liée au rebord de l'élément de toiture non illustré au niveau de son extrémité 110 et d'autre part liée au sol S ou au rebord du bassin par sa partie plane 120. Cette platine 100 est également percée d'un orifice 121 venant en vis à vis d'un trou 200 ménagé dans le sol S,

Le dispositif D vient, en traversant la platine par l'orifice 121, coopérer avec le trou 200 ménagé au sol S et prendre appui sur la platine 100 à des fins de fixation de cette dernière.

Pour ce faire et conformément au concept de l'invention, le dispositif D comprend une douille expansible 300 passant d'un volume dit de repos autorisant son introduction dans le trou 200 ménagé dans le sol S (cf. figure 1) à un volume dit expansé assurant son adhérence aux parois cylindriques 210 dudit trou 200 (cf. figure 2).

Selon le mode de réalisation illustré, la douille 300 est en matériau élastique acceptant une déformation dont la mise en oeuvre est décrite ci-après. La douille expansible 300 est creuse et reçoit dans son âme creuse 310, une tige d'expansion 400 dont une première extrémité 410 est liée à l'extrémité basse 320 de la douille 300 et dont la deuxième extrémité 420 débouche hors de la douille et est liée à un module de mise en mouvement et de verrouillage assurant le déplacement en translation de la dite tige 400 qui, du fait de sa liaison avec la douille, assure sa déformation ou son retour en position initiale. La déformation assure une expansion radiale de la douille dont les parois extérieures vont exercer une pression sur les parois intérieures 210 du trou 200 ménagé dans le sol S. La pression exercée permet de fixer au sol le dispositif D et donc la platine 100 sur laquelle il s'appuie.

Une douille en matière plastique tend en outre, de par son élasticité, à reprendre une position normale de repos ce qui facilite le mouvement de déverrouillage. Le dispositif comprend un levier/came 500 passant d'une position relevée à passant d'une position relevée (cf. figure 1) où la douille 300 est en position repos à une position abaissée (cf. figure 2) où la douille 300 est en position expansée. Ainsi, le déplacement en translation de la tige 400 est mis en oeuvre par un levier/came 500 qui, par une rotation selon 90° et un appui contre la tête de la douille 300, augmente la distance entre son point de liaison avec l'extrémité 420 de la tige 400 et la surface du sol. Pour ce faire, le levier 500 est équipé d'une noix de liaison 510 qui accueille et retient l'extrémité 420 de la tige et autour de laquelle pivote selon un axe horizontal ledit levier 500. Ce levier 500 présentant une épaisseur plus importante en position horizontale qu'en position verticale, la noix 510 et en conséquence l'extrémité 420 s'éloigne de la surface d'appui entre le levier 500 et la tête de la douille 300.

Bien que non illustré, un tel mode de réalisation de dispositif peut autoriser la fixation dans des inserts filetés occupant le trou 200 car la surface plastique de la douille peut partiellement s'introduire dans le filetage et proposer la fixation recherchée.

Pour mieux coopérer avec des inserts filetés existants ou à installer, la demanderesse a prévu d'autres modes de réalisation qui sont décrits ci-après.

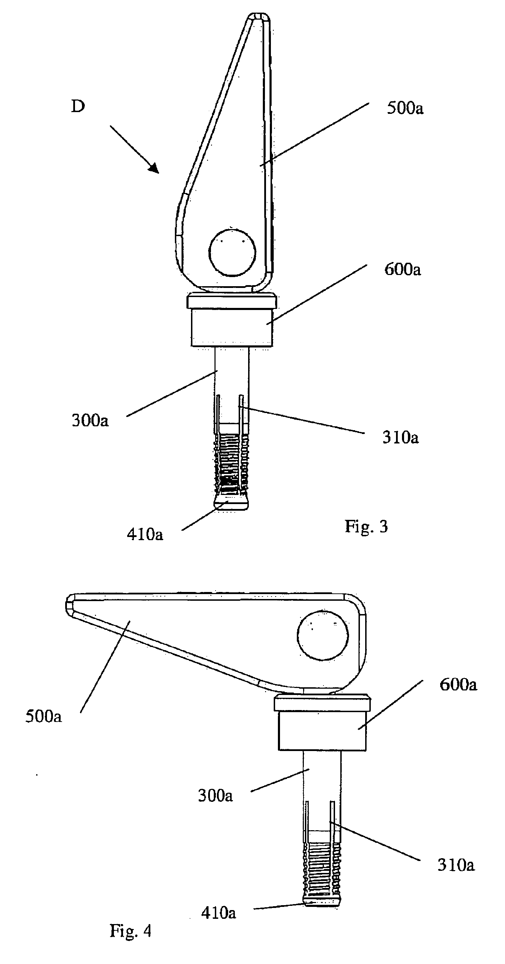

Comme illustrée sur le dessin des figures 3, 4, 5 et 6, la douille c'est à dire la partie s'expansant à l'intérieur de l'insert fileté est constituée par un tube cylindrique 300a dont la surface extérieure est, au moins en extrémité basse, filetée, du même pas et de la même profondeur que le filetage proposé par l'insert (non illustré). Afin de proposer un diamètre inférieur à celui de l'insert, le tube fileté est avantageusement ménagé d'entailles 310a débouchant sur l'extrémité basse ce qui en diminue le diamètre et augmente l'élasticité de cette partie filetée qui va lui permettre de passer d'une position de repos (cf. figure 3) d'un diamètre permettant le glissement de la douille 300a dans l'insert fileté à une position expansée (cf. figure 4) où le diamètre de la douille 300a correspond à une tige filetée coopérant avec le filetage de l'insert (non illustré).

Cette douille 300a est préférentiellement métallique et selon un mode de réalisation préférée, elle est en laiton. Afin d'assurer une expansion progressive, la tige d'expansion 400a entre dans l'âme creuse de la douille 300a afin de lui donner le diamètre souhaité. Ainsi, dans ce mode de réalisation, la douille expansible 300a est enfilée sur une tige 400a équipée d'une tête 410a dont le déplacement en translation assure l'expansion ou la diminution de la douille 300a.

Afin d'optimiser l'expansion, la tête 410a de la tige 400a présente un profil tronconique arrondi et pénètre partiellement à l'intérieur de l'âme creuse de la douille 300a.

Le déplacement de la tige 300a est mis en oeuvre de la même façon que dans le premier mode de réalisation par rotation d'un levier came 500a. Néanmoins et afin de pallier le manque d'élasticité de la douille 300a et de mieux maintenir la pression exercée, un tampon de compression 600a s'intercale entre le haut de la douille 300a et le bas du levier 500a. Ce tampon 600a fabriqué dans une matière élastique assure, une fois compressé entre le levier 500a et la platine 100, le maintien d'une tension installée en position expansée et donc en position verrouillée.

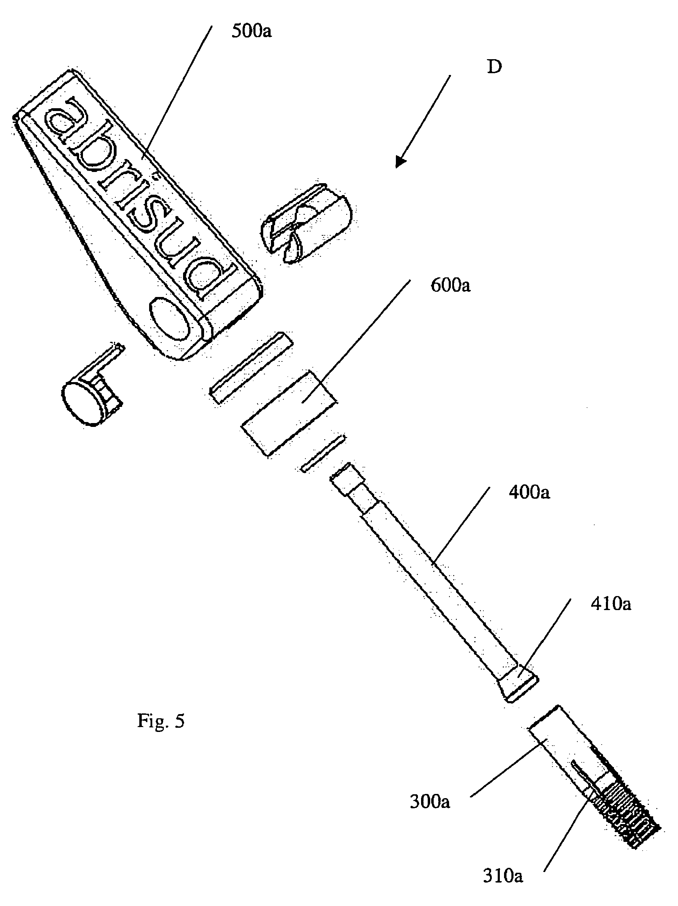

Ce mode de réalisation est illustré par le dessin en perspective éclatée de la figure 5.

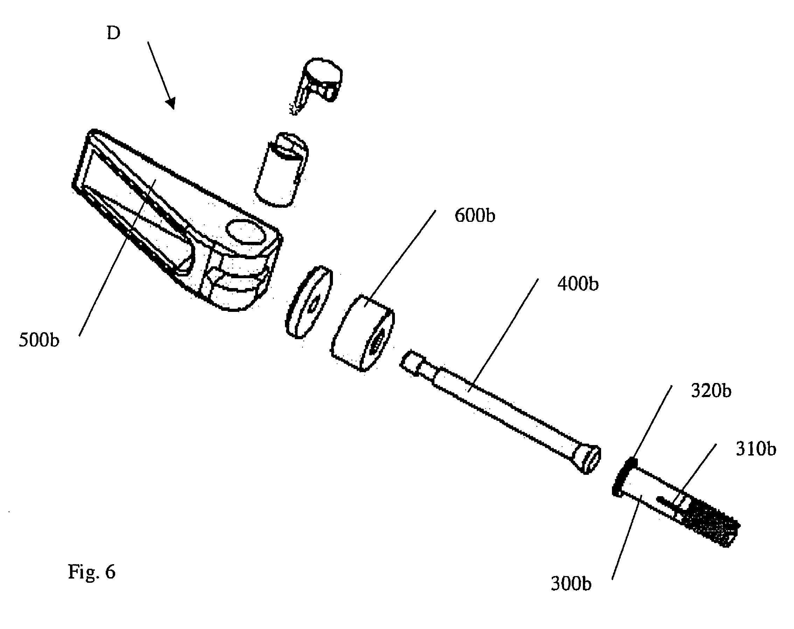

Le dessin de la figure 6 illustre un autre mode de réalisation du dispositif D qui diffère de celui montré par les figures 3 à 5 en ce que la douille 300b préformée d'entailles 310b comporte une tête 320b avec laquelle va venir se solidariser le tampon de compression 600b. Ainsi ce mode de réalisation propose une liaison entre les différents éléments enfilés sur la tige d'expansion 400b

On comprend que le dispositif, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Dispositif (D) de verrouillage/déverrouillage au sol (S) d'une platine de liaison (100) au sol ou au rebord d'un bassin d'un élément de toiture,
la platine (100) étant d'une part liée au rebord de l'élément de toiture et d'autre part liée au sol (S) ou au rebord du bassin,
la platine (100) étant percée d'un orifice (121) venant en vis à vis d'un trou (200) ménagé dans le sol,
le dispositif de verrouillage/déverrouillage venant coopérer avec le trou (200) ménagé au sol et prendre appui sur la platine (100) à des fins de fixation de cette dernière,
**CARACTÉRISÉ PAR LE FAIT QU'**il comprend une douille expansible (300) passant d'un volume dit de repos autorisant son introduction dans le trou (200) ménagé dans le sol à un volume dit expansé assurant son adhérence aux parois (210) dudit trou (200).

2. Dispositif (D) selon la revendication 1 où le trou est équipé d'un insert fileté, **CARACTÉRISÉ PAR LE FAIT QUE** la douille expansible (300a) est constituée par un cylindre fileté selon le pas et la profondeur défini par l'insert et fendu pour passer d'une position de repos d'un diamètre permettant le glissement de la douille (300a) dans l'insert fileté à une position expansée où le diamètre correspond à une tige filetée coopérant avec le filetage de l'insert.

3. Dispositif (D) selon la revendication 1, **CARACTÉRISÉ PAR LE FAIT QUE** la douille expansible (300) est un cylindre en matériau élastique dont une pression au niveau de ses extrémités permet la création d'une expansion radiale de son corps qui va permettre l'adhérence de la douille (300) aux parois (210) du trou (200).

4. Dispositif (D) selon la revendication 2 ou 3, **CARACTÉRISÉ PAR LE FAIT QUE** la douille expansible (300) est creuse et est enfilée sur une tige (400) équipée d'une tête (410) coopérant avec l'extrémité inférieure (320) de la douille expansible (300) et dont le déplacement en translation assure l'expansion ou la diminution de la douille (300).

5. Dispositif (D) selon la revendication 1, **CARACTÉRISÉ PAR LE FAIT QU'**il comprend un levier/came (500) passant d'une position relevée où la douille (300) est en position repos à une position abaissée où la douille (300) est en position expansée.

6. Dispositif (D) selon la revendication 5, **CARACTÉRISÉ PAR LE FAIT QUE** la rotation du levier (500) assure le déplacement en translation de la tige (400).

7. Dispositif (D) selon la revendication 5, **CARACTÉRISÉ PAR LE FAIT QUE** ledit levier (500) est préformé d'un profil qui dans sa rotation vient en appui contre ladite platine (100).

8. Dispositif (D) selon la revendication 7, **CARACTÉRISÉ PAR LE FAIT QUE** l'extrémité haute de la douille (300) comprend une tête offrant une surface d'appui contre la platine (100).

9. Dispositif (D) selon la revendication 5, **CARACTÉRISÉ PAR LE FAIT QU'**un moyen de compression (600a et 600b) s'intercale entre l'extrémité haute de la douille (300a et 300b) et la surface d'appui du levier (500a et 500b) et se déforme sous l'action de celui-ci en position abaissée.

## Claims

1. Device (D) for locking/unlocking to the ground (S) of a connecting plate (100) to the ground or to the rim of a basin of a roof element,
the plate (100) being on the one hand connected to the rim of the roof element and on the other hand connected to the ground (S) or to the rim of the basin,
the plate (100) being pierced by an orifice (121) coming to face a hole (200) made in the ground,
the device for locking/unlocking interacting with the hole (200) made in the ground and rests against the plate (100) for the purposes of attaching the latter,
**CHARACTERISED IN THAT** it comprises an expandable bushing (300) passing from a volume called a rest volume authorising its introduction into the hole (200) made in the ground to a volume called the expanded volume providing its adhesion to the walls (210) of said hole (200).

2. Device (D) according to claim 1 wherein the hole is provided with a threaded insert, **CHARACTERISED BY** THE FACT THAT the expandable bushing (300a) is comprised by a threaded cylinder according to the pitch and the depth defined by the insert and split in order to pass from a rest position of a diameter allowing for the sliding of the bushing (300a) in the threaded insert to an expanded position wherein the diameter corresponds to a threaded rod interacting with the threading of the insert.

3. Device (D) according to claim 1, **CHARACTERISED BY** THE FACT THAT the expandable bushing (300) is a cylinder made of elastic material of which a pressure on its ends allows for the creation of a radial expansion of its body which will allow for the adhesion of the bushing (300) to the walls (210) of the hole (200).

4. Device (D) according to claim 2 or 3, **CHARACTERISED BY** THE FACT THAT the expandable bushing (300) is hollow and is threaded onto a rod (400) provided with a head (410) interacting with the lower end (320) of the expandable bushing (300) and of which the displacement in translation provides the expansion or the decrease of the bushing (300).

5. Device (D) according to claim 1, **CHARACTERISED BY** THE FACT THAT it comprises a lever/cam (500) passing from a raised position wherein the bushing (300) is in a position of rest to a lowered position wherein the bushing (300) is in an expanded position.

6. Device (D) according to claim 5, **CHARACTERISED BY** THE FACT THAT the rotation of the lever (500) provides for the displacement in translation of the rod (400).

7. Device (D) according to claim 5, **CHARACTERISED BY** THE FACT THAT said lever (500) is preformed with a profile which in its rotation comes to rest against said plate (100).

8. Device (D) according to claim 7, **CHARACTERISED BY** THE FACT THAT the high end of the bushing (300) comprises a head offering a resting surface against the plate (100).

9. Device (D) according to claim 5, **CHARACTERISED BY** THE FACT THAT a means of compressing (600a and 600b) is located between the high end of the bushing (300a and 300b) and the resting surface of the lever (500a and 500b) and is deformed under the action of the latter in lowered position.

## Patentansprüche

1. Vorrichtung (D) zum auf dem Boden (S) Verriegeln/Entriegeln einer Verbindungsplatte (100) auf dem Boden oder am Rand eines Beckens eines Dachabdeckungselements,
wobei die Platte (100) einerseits mit dem Rand des Dachabdeckungselements und andererseits mit dem Boden (S) oder dem Rand des Beckens verbunden ist,
wobei durch die Platine (100) eine Öffnung (121) geht, die gegenüber einem Loch (200) zu liegen kommt, das im Boden angebracht ist,
wobei die Verriegelungs-/Entriegelungs-Vorrichtung mit dem im Boden angebrachten Loch (200) zusammenwirkt und sich auf der Platte (100) zur Befestigung derselben abstützt,
**dadurch gekennzeichnet, dass** sie eine dehnbare Hülse (300) umfasst, die von einem so genannten Ruhevolumen, das ihre Einführung in das im Boden angebrachte Loch (200) ermöglicht, auf ein so genanntes ausgedehntes Volumen übergeht, das ihre Haftung an den Wänden (210) des Lochs (200) sicherstellt.

2. Vorrichtung (D) nach Anspruch 1, wobei das Loch mit einem Gewindeeinsatz ausgestattet ist, **dadurch gekennzeichnet, dass** die dehnbare Hülse (300a) aus einem Zylinder besteht, der mit einem Gewinde versehen ist, das der Steigung und der Tiefe entspricht, der von dem Einsatz definiert wird und mit einem Schlitz versehen ist, um von einer Ruheposition mit einem Durchmesser, der das Gleiten der Hülse (300a) in dem Gewindeeinsatz ermöglicht, auf eine ausgedehnte Position überzugehen, in welcher der Durchmesser einem Gewindestift entspricht, der mit dem Gewinde des Einsatzes zusammenwirkt.

3. Vorrichtung (D) nach Anspruch 1, **dadurch gekennzeichnet, dass** die dehnbare Hülse (300) ein Zylinder aus elastischem Material ist, dessen Druck an seinen Enden die Erstellung einer radialen Ausdehnung seines Körpers ermöglicht, welche die Haftung der Hülse (300) an den Wänden (210) des Lochs (200) ermöglicht.

4. Vorrichtung (D) nach Anspruch 2 oder 3, **dadurch gekennzeichnet, dass** die dehnbare Hülse (300) hohl ist und auf einen Stab (400) aufgeschoben wird, der mit einem Kopf (410) ausgestattet ist, der mit dem unteren Ende (320) der dehnbaren Hülse (300) zusammenwirkt und dessen Translationsverschiebung die Ausdehnung oder Verkleinerung der Hülse (300) sicherstellt.

5. Vorrichtung (D) nach Anspruch 1, **dadurch gekennzeichnet, dass** sie einen Hebel/Nocken (500) umfasst, der von einer angehobenen Position, in der die Hülse (300) sich in der Ruheposition befindet, auf eine abgesenkte Position, in der die Hülse (300) sich in einer ausgedehnten Position befindet, übergeht.

6. Vorrichtung (D) nach Anspruch 5, **dadurch gekennzeichnet, dass** die Drehung des Hebels (500) die Translationsverschiebung des Stabs (400) sicherstellt.

7. Vorrichtung (D) nach Anspruch 5, **dadurch gekennzeichnet, dass** der Hebel (500) aus einem Profil vorgeformt ist, das sich in seiner Drehung an der Platte (100) abstützt.

8. Vorrichtung (D) nach Anspruch 7, **dadurch gekennzeichnet, dass** das obere Ende der Hülse (300) einen Kopf umfasst, der eine Oberfläche zum Abstützen an der Platte (100) umfasst.

9. Vorrichtung (D) nach Anspruch 5, **dadurch gekennzeichnet, dass** ein Kompressionsmittel (600a und 600b) zwischen dem oberen Ende der Hülse (300a und 300b) und der Stützfläche des Hebels (500a und 500b) eingeschoben wird und sich unter der Einwirkung derselben in der abgesenkten Position verformt.
